# FASCICULE DE BREVET EUROPEEN

(11) **EP 1 998 025 B1**
(45) Date de publication et mention de la délivrance du brevet: **18.10.2017**
(21) Numéro de dépôt: 08157232.3
(22) Date de dépôt: 29.05.2008
(51) Int. Cl.: F04D 29/68, F01D 17/10, F01D 17/16, F02K 1/28, F02C 9/18, F04D 29/56, F04D 27/02, F02C 6/08

(54) **Compresseur à réinjection d'air**
Verdichter mit Luftrückführung
Compressor with air re-injection

(30) Priorité: 30.05.2007 FR 0755323
(43) Date de publication de la demande: 03.12.2008
(73) Titulaire: SNECMA, 75015 Paris (FR)
(72) Inventeur: Brault, Michel Gilbert Roland, 91480 Quincy sous Senart (FR); Obrecht, Thierry Jean-Jacques, 77000 Melun (FR)
(74) Mandataire: Intès, Didier Gérard André

(56) Documents cités:
- EP-A- 1 482 129
- WO-A-80/00728
- GB-A- 2 027 811
- US-A- 3 123 283
- US-A1- 2004 081 552

## Description

L'invention se rapporte à un compresseur, notamment un compresseur haute pression de turbomachine telle d'un turboréacteur d'avion. Elle concerne plus particulièrement la réinjection d'air à l'entrée, pour améliorer la marge au pompage (opérabilité) d'un tel compresseur.

Dans un compresseur haute pression comportant un carter annulaire à l'intérieur duquel sont installés plusieurs étages de roues mobiles à aubes, on sait que la première roue mobile est particulièrement sensible du point de vue marge au pompage. Il est connu de prélever de l'air sous pression au niveau de l'un des étages du compresseur lui-même et de le réinjecter en amont de la première roue mobile, et au voisinage de celle-ci. Classiquement, on réinjecte l'air via des trous ou des tubes traversant l'enveloppe extérieure du carter. L'air est guidé le plus tangentiellement possible par rapport à la paroi du carter.

L'invention concerne un perfectionnement à ce type de compresseur, pour améliorer l'efficacité de la réinjection d'air quelque soit le régime moteur. L'idée de base de l'invention consiste à faire varier l'orientation de la réinjection d'air en fonction du régime du moteur. Ceci est obtenu en mettant à profit le fait que les aubes du redresseur d'entrée, en amont du premier étage de compression, sont d'orientation réglable en fonction du régime du moteur. L'invention consiste donc à associer la réinjection d'air à l'orientation réglable des aubes du redresseur pour améliorer l'efficacité de la réinjection.

EP 1 609 999 décrit un compresseur avec réinjection d'air débouchant dans la veine sensiblement tangentiellement par rapport au carter.

L'invention concerne principalement un Compresseur comportant un carter abritant plusieurs étages de compression comprenant chacun une roue à aubes mobile et entraînée en rotation, le premier étage étant précédé d'un redresseur d'entrée présentant des aubes fixes à orientation réglable, comportant des pivots traversant ledit carter et un circuit de réinjection d'air, dans lequel ledit circuit de réinjection d'air comporte des trous d'injection traversant au moins certaines des aubes dudit redresseur d'entrée, débouchant intérieurement au voisinage de leurs pivots, dans la veine d'entrée du compresseur de façon sensiblement tangentielle par rapport au carter chaque aube fixe précitée comportant une embase à contour circulaire au centre de laquelle le pivot fait saillie vers l'extérieur, cette embase étant logée dans un logement d'une enveloppe externe du carter et lesdits trous d'injection s'étendant en biais au travers de l'embase. caractérisé en ce que des trous d'arrivée d'air pratiqués dans ladite enveloppe externe du carter débouchent dans une cavité annulaire définie autour dudit pivot et limitée par la surface radialement externe dudit redresseur d'entrée, ladite enveloppe externe du carter, un joint annulaire plat et une douille formant le palier dudit pivot, lesdits trous d'injection s'étendant entre ladite cavité annulaire et l'intérieur dudit carter.

L'air réinjecté peut, classiquement, être prélevé sur l'un des étages de compression.

Pour chaque aube de redresseur concernée, au moins un tel trou est pratiqué en biais, par exemple au travers de l'embase à contour circulaire qui sépare le pivot de la pale de l'aube, voire au moins en partie au travers du pivot lui-même.

Les trous d'injection sont percés dans des aubes du redresseur d'entrée régulièrement réparties circonférentiellement. Les perçages peuvent être pratiqués sur toutes les aubes ou sur seulement une partie d'entre elles, par exemple une sur deux ou une sur trois, etc...

Les trous peuvent déboucher dans la veine d'entrée du compresseur en intrados ou en extrados des pales du redresseur d'entrée. Il est préférable qu'une partie au moins des trous débouche en extrados. Cependant, plusieurs trous peuvent déboucher en extrados et les autres en intrados.

L'invention sera mieux comprise et d'autres avantages de celles-ci apparaîtront mieux à la lumière de la description qui va suivre d'un compresseur conforme à son principe, donnée uniquement à titre d'exemple et faite en référence aux dessins annexés dans lesquels :
- la figure 1 est une vue partielle schématique d'un compresseur haute pression dans lequel une partie de l'air comprimé est réinjectée à l'entrée ;
- la figure 2 est une vue de détail du compresseur conforme à l'invention et illustrant la circulation de l'air au travers des pivots des aubes fixes réglables du redresseur d'entrée ;
- la figure 3 est une vue en perspective d'une aube de redresseur conforme à l'invention ;
- la figure 3A est une vue selon la flèche IIIA de la figure 3 ;
- la figure 4 est une vue en perspective d'une aube de redresseur selon une variante de l'invention ;
- la figure 4A est une vue selon la flèche IVA de la figure 4 ;
- la figure 5 est une vue en perspective d'une aube de redresseur selon une autre variante de l'invention ; et
- la figure 5A est une vue selon la flèche VA de la figure 5.

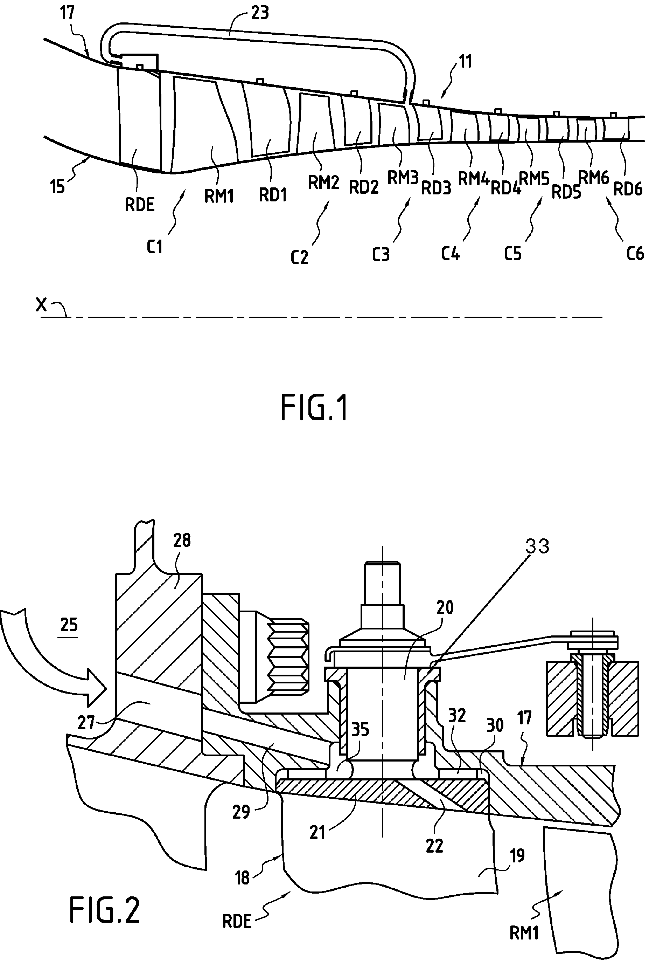

Sur les dessins, on a représenté schématiquement et en coupe un compresseur haute pression 11 à géométrie annulaire, d'axe X et qui comporte six étages de compression C₁-C₆, chaque étage comprenant une roue à aubes entraînée en rotation, dite roue mobile RM₁-RM₆, et un redresseur RD₁-RD₆ comprenant des aubes fixes, éventuellement à orientation réglable. Le carter annulaire du compresseur comporte une enveloppe interne 15, entraînée en rotation et à laquelle sont rattachées les roues mobiles et une enveloppe externe 17, fixe. Les différents redresseurs s'étendent entre l'enveloppe interne 15 et l'enveloppe externe 17. En outre, un redresseur d'entrée RDE comporte des aubes fixes à orientation réglable. Comme cela est visible sur la figure 2, chaque aube 18 du redresseur RDE comporte une pale 19, un pivot 20 traversant l'enveloppe externe 17 et une embase 21 à contour circulaire située entre le pivot et la pale.

Il est connu d'agencer un circuit de réinjection d'air 23 entre l'un des étages de compression et l'entrée du compresseur. Par exemple, comme représenté sur la figure 1, le prélèvement d'air est effectué à la sortie du troisième étage de compression et réinjecté en amont de la roue mobile RM₁ du premier étage de compression.

Selon l'invention, le circuit de réinjection d'air comporte un ou plusieurs trous d'injection 22 traversant au moins certaines des aubes 18 du redresseur d'entrée, qui se situe immédiatement en amont de la roue mobile RM₁ du premier étage C₁.

Comme on le voit sur la figure 2, l'air prélevé en aval est introduit dans un collecteur 25 situé à l'extérieur de l'enveloppe externe du carter du compresseur. Des trous 27 sont percés dans la bride 28 du carter intermédiaire par lequel le compresseur est rattaché à la structure. Les trous 27 sont prolongés par des trous 29 de l'enveloppe 17, qui aboutissent au voisinage du pivot 20 d'au moins certaines aubes à positionnement réglable du redresseur d'entrée RDE, situé immédiatement en amont de la première roue mobile RM₁ du compresseur. Pour chaque aube 18, le pivot fait saillie de l'embase à contour circulaire 21 qui est montée dans un logement 30 correspondant de l'enveloppe 17. Un joint annulaire plat 32 est interposé entre l'embase 21 et le fond du logement 30. Ainsi une petite cavité annulaire 35 subsiste autour de la base du pivot 20. Elle est limitée par la surface radialement externe du redresseur RDE, l'enveloppe 17 du carter, le joint 32 et une douille 33 formant le palier du pivot 20. Le trou 29 correspondant débouche dans cette cavité annulaire.

Selon l'exemple le ou les trous 22 s'étendent entre la cavité annulaire 35 et l'intérieur du carter, immédiatement en amont de la première roue mobile RM₁ du premier étage de compression C₁.

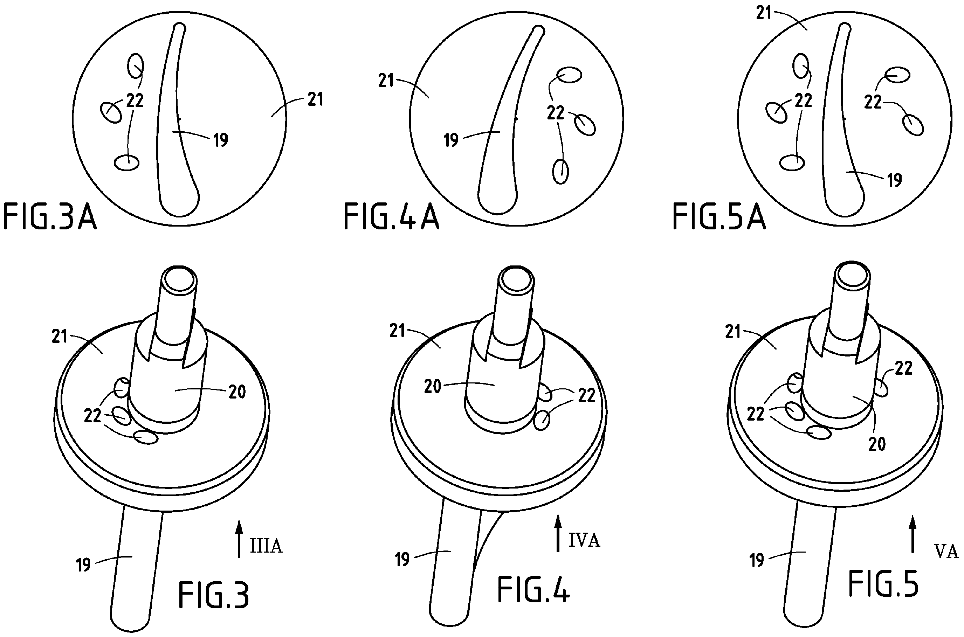

Comme on le voit sur le dessin, chaque embase 21 est pourvue d'au moins un trou 22 qui débouche dans la veine d'entrée du compresseur de façon sensiblement tangentielle par rapport au carter. Comme on peut le voir sur les figures 3 à 5, chaque embase 21 peut être percée d'un ou plusieurs trous obliques 22 établissant cette communication. Par exemple, un tel trou peut déboucher dans la veine d'entrée du compresseur en extrados de l'aube correspondante (figures 3, 3A) ou bien en intrados de ladite aube (figures 4, 4A). De préférence, on prévoit au moins un trou débouchant en extrados, mais il est possible de prévoir plusieurs trous, certains débouchant en intrados et d'autres en extrados (figures 5, 5A).

On peut prévoir un tel agencement pour chaque aube de redresseur à orientation réglable ou pour seulement une partie d'entre elles régulièrement espacées circonférentiellement.

Ainsi, le fait de faire passer l'air réinjecté au travers des aubes à positionnement réglable du redresseur d'entrée RDE permet de faire varier de façon réglable et favorable l'orientation des jets d'air réinjecté à l'entrée du premier étage de compression, en fonction du régime du moteur. L'air réinjecté est guidé par l'aube à positionnement réglable du redresseur, ce qui améliore l'efficacité de la réinjection.

Avantageusement, les trous dans l'embase 21 sont calibrés et répartis de façon à obtenir une bonne alimentation de la veine extérieure du compresseur en terme de débit, de vitesse et d'angle d'injection pour l'amélioration de ses performances.

Dans ce concept de trous dans l'embase, l'injection d'air peut donc suivre les différentes positions du calage variable du redresseur et permettre ainsi une bonne alimentation de la roue mobile du compresseur.

Le débit d'air est calculé pour chaque type de compresseur.

## Revendications

1. Compresseur comportant un carter abritant plusieurs étages de compression comprenant chacun une roue à aubes mobile (RM₁-RM₆) et entraînée en rotation, le premier étage étant précédé d'un redresseur d'entrée (RDE) présentant des aubes fixes à orientation réglable, comportant des pivots (20) traversant ledit carter et un circuit de réinjection (23) d'air, dans lequel ledit circuit de réinjection d'air comporte des trous d'injection (22) traversant au moins certaines des aubes dudit redresseur d'entrée, débouchant intérieurement au voisinage de leurs pivots, dans la veine d'entrée du compresseur de façon sensiblement tangentielle par rapport au carter, chaque aube fixe précitée comportant une embase (21) à contour circulaire au centre de laquelle le pivot fait saillie vers l'extérieur, cette embase étant logée dans un logement (30) d'une enveloppe externe (17) du carter et lesdits trous d'injection s'étendant en biais au travers de l'embase, **caractérisé en ce que** des trous (29) d'arrivée d'air pratiqués dans ladite enveloppe externe (17) du carter débouchent dans une cavité annulaire (35) définie autour dudit pivot (20) et limitée par la surface radialement externe dudit redresseur d'entrée, ladite enveloppe externe du carter, un joint annulaire plat (32) et une douille formant le palier dudit pivot, lesdits trous d'injection (22) s'étendant entre ladite cavité annulaire (35) et l'intérieur dudit carter.

2. Compresseur selon la revendication 1, **caractérisé en ce que** des trous d'injection (22) sont percés dans des aubes du redresseur d'entrée, régulièrement réparties circonférentiellement.

3. Compresseur selon la revendication 1 ou 2, **caractérisé en ce que** lesdits trous (22) débouchent dans la veine d'entrée du compresseur en extrados des aubes (19) du redresseur d'entrée.

4. Compresseur selon la revendication 1 ou 2, **caractérisé en ce que** lesdits trous (22) débouchent dans la veine d'entrée du compresseur en intrados des aubes (19) du redresseur d'entrée.

5. Compresseur selon la revendication 1 ou 2, **caractérisé en ce que** certains trous (22) précités débouchent dans la veine d'entrée du compresseur en extrados et d'autres en intrados des aubes du redresseur d'entrée.

6. Turbomachine comportant un compresseur selon l'une des revendications précédentes.

## Patentansprüche

1. Verdichter, umfassend ein Gehäuse, das mehrere Verdichtungsstufen aufnimmt, umfassend jeweils ein bewegliches Schaufelrad (RM₁-RM₆), das in Drehung angetrieben wird, wobei der ersten Stufe ein Eingangsgleichrichter (RDE) vorangestellt ist, der feste Schaufeln mit einstellbarer Ausrichtung aufweist, umfassend Zapfen (20), die durch das Gehäuse hindurchgehen, und eine Luftrückführungsschaltung (23), wobei die Luftrückführungsschaltung Einspritzlöcher (22) umfasst, die durch mindestens gewisse der Schaufeln des Eingangsgleichrichters hindurchgehen, innen in der Nähe ihrer Zapfen im Eintrittskanal des Verdichters im Wesentlichen tangential zum Gehäuse münden, wobei jede vorgenannte feste Schaufel einen Sockel (21) mit kreisförmiger Kontur umfasst, in dessen Mitte der Zapfen nach außen vorsteht, wobei dieser Sockel in einer Lagerung (30) einer äußeren Hülle (17) des Gehäuses angeordnet ist, und sich die Einspritzlöcher schräg durch den Sockel erstrecken, **dadurch gekennzeichnet, dass** die Lufteintrittslöcher (29), die in der äußeren Hülle (17) des Gehäuses vorgesehen sind, in einem ringförmigen Hohlraum (35) münden, der um den Zapfen (20) definiert und von der radial äußeren Fläche des Eingangsgleichrichters, der äußeren Hülle des Gehäuses, eine flachen Ringdichtung (32) und einer Büchse, die das Lager des Zapfens bildet, begrenzt ist, wobei sich die Einspritzlöcher (22) zwischen dem ringförmigen Hohlraum (35) und dem Inneren des Gehäuses erstrecken.

2. Verdichter gemäß Anspruch 1, **dadurch gekennzeichnet, dass** die Einspritzlöcher (22) in Schaufeln des Eingangsgleichrichters, regelmäßig in Umfangsrichtung verteilt, gebohrt sind.

3. Verdichter gemäß Anspruch 1 oder 2, **dadurch gekennzeichnet, dass** die Löcher (22) in den Eintrittskanal des Verdichters auf der Oberseite der Schaufeln (19) des Eingangsgleichrichters münden.

4. Verdichter gemäß Anspruch 1 oder 2, **dadurch gekennzeichnet, dass** die Löcher (22) in den Eintrittskanal des Verdichters auf der Unterseite der Schaufeln (19) des Eingangsgleichrichters münden.

5. Verdichter gemäß Anspruch 1 oder 2, **dadurch gekennzeichnet, dass** gewisse vorgenannte Löcher (22) in den Eintrittskanal des Verdichters auf der Oberseite und andere auf der Unterseite der Schaufeln des Eingangsgleichrichters münden.

6. Turbomaschine, umfassend einen Verdichter gemäß einem der vorgenannten Ansprüche.

## Claims

1. A compressor comprising a casing housing a plurality of compression stages, each comprising a bladed rotor wheel (RM₁-RM₆) driven in rotation, the first stage being preceded by an inlet stator (RDE) presenting stationary vanes of adjustable pitch, having pivots (20) that pass through said casing, and an air reinjection circuit (23), wherein said air reinjection circuit includes injection holes (22) passing through at least some of the vanes of said inlet stator, and opening out internally in the vicinity of their pivots, into the inlet stream of the compressor substantially tangentially relative to the casing, wherein each above-mentioned stationary vane includes a base (21) of circular outline with the pivots projecting outwards from the center thereof, said base is housed in a housing (30) in an outer shroud (17) of the casing, and said injection holes (22) extend in inclined manner through the base, **characterized in that** air inlet holes (29) extending in said outer shroud (17) of the casing open out into an annular cavity (35) defined around said pivot (20) and defined by the radially outer surface of said inlet stator, said casing outer shroud, a flat annular gasket (32) and a bushing forming the bearing of said pivot, said injection holes (22) extending between said annular cavity (35) and the inside of the casing.

2. A compressor according to claim 1, **characterized in that** injection holes (22) are pierced in inlet stator vanes that are regularly distributed circumferentially.

3. A compressor according to claim 1 or claim 2, **characterized in that** said holes (22) open out into the inlet stream of the compressor on the suction sides of the vanes (19) of the inlet stator.

4. A compressor according to claim 1 or claim 2, **characterized in that** said holes (22) open out into the inlet stream of the compressor at the pressure side of the vanes (19) of the inlet stator.

5. A compressor according to claim 1 or claim 2, **characterized in that** some of the above-mentioned holes (22) open out into the inlet stream of the compressor at the suction side and others at the pressure side of the vanes of the inlet stator.

6. A turbomachine including a compressor according to any preceding claim.
